# EUROPEAN PATENT APPLICATION

(11) **EP 3 812 242 A1**
(43) Date of publication of application: **28.04.2021**
(21) Application number: 20203337.9
(22) Date of filing: 22.10.2020
(51) Int. Cl.: B62D 1/19, B62D 1/184

(54) **STEERING COLUMN DEVICE**

(30) Priority: 24.10.2019 JP 2019193615
(71) Applicant: JTEKT CORPORATION, Chuo-ku, Osaka-shi, Osaka 542-8502 (JP)
(72) Inventor: BAITOU, Takahiro, Kosai-shi, Shizuoka 431-0431 (JP); HAKAMATA, Yoshinori, Kosai-shi, Shizuoka 431-0431 (JP); YOSHIMURA, Satoki, Osaka-shi, Osaka 542-8502 (JP)
(74) Representative: Winter, Brandl - Partnerschaft mbB

(57) **Abstract**

A steering column device (1) includes: a mount bracket (2) including a pair of side wall portions (5); a steering column (3); a distance bracket (12) including a pair of sliding contact walls (15); a tilt bolt (22) extending through the side wall portions (5) and the sliding contact walls (15); and a receiving surface portion (36). The receiving surface portion (36) is configured to suppress the steering column (3) that has come into contact with the mount bracket (2) from bending upward in an up-down direction of a vehicle body when a load equal to or greater than a set value is applied to an upper tube (7) toward a front of the vehicle body. The receiving surface portion (36) has an arc shape that protrudes upward in the up-down direction of the vehicle body when viewed in a front-rear direction of the vehicle body.

## Description

### BACKGROUND OF THE INVENTION

### 1. Field of the Invention

The invention relates to a steering column device.

### 2. Description of Related Art

A steering column device has a mount bracket fixed to a vehicle body and having a pair of side wall portions, and a steering column constituted by fitting an upper tube and a lower tube to each other and disposed between the side wall portions so as to extend in a front-rear direction of the vehicle body (for example, Japanese Unexamined Patent Application Publication No. 9-123923 (JP 9-123923 A)). The steering column device includes a distance bracket provided on the upper tube of the steering column and having a pair of sliding contact walls, and a tilt bolt extending through the side wall portions and the sliding contact walls. The side wall portions of the mount bracket support the steering column such that the steering column is movable in the tilt direction.

The steering column device described above is configured such that, when a load is applied to the steering column at the time of a secondary collision, the upper tube moves toward the front of the vehicle body along the tube axial direction so that the steering column is contracted to absorb the energy due to a collision load.

### SUMMARY OF THE INVENTION

In the steering column device described above, when a load is applied to the steering column at the time of a secondary collision, the steering column that has come into contact with the mount bracket may bend upward in an up-down direction of the vehicle body from the tilt bolt serving as a support point, and in that state the contraction of the steering column may stop.

In view of this, the invention suppresses the steering column that has come into contact with the mount bracket from bending upward in the up-down direction of the vehicle body, and thus reliably contracts the steering column, when a load is applied to the steering column at the time of a secondary collision.

An aspect of the invention relates to a steering column device. The steering column device includes a mount bracket, a steering column, a distance bracket, a tilt bolt, and a receiving surface portion. The mount bracket is fixed to a vehicle body and includes a pair of side wall portions. The steering column is constituted by fitting an upper tube and a lower tube to each other. The steering column is disposed between the side wall portions so as to extend in a front-rear direction of the vehicle body. The distance bracket is provided on the upper tube and includes a pair of sliding contact walls. The tilt bolt extends through the side wall portions and the sliding contact walls. The receiving surface portion is provided on the mount bracket. The receiving surface portion is configured to suppress the steering column that has come into contact with the mount bracket from bending upward in an up-down direction of the vehicle body when a load equal to or greater than a set value is applied to the upper tube toward a front of the vehicle body. The receiving surface portion is configured to facilitate contraction of the steering column due to a relative movement of the upper tube and the lower tube. The receiving surface portion has an arc shape that protrudes upward in the up-down direction of the vehicle body when viewed in the front-rear direction of the vehicle body.

With the above configuration, the steering column that has come into contact with the mount bracket is suppressed from bending upward in the up-down direction of the vehicle body, allowing reliable contraction of the steering column, when a load is applied to the steering column at the time of a secondary collision.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view showing a steering column device according to an embodiment of the invention;
FIG. 2 is a schematic side view showing the steering column device according to the embodiment of the invention;
FIG. 3 is a schematic perspective view showing a detachment mechanism;
FIG. 4 is a schematic side sectional view showing the detachment mechanism; and
FIG. 5 is a schematic side sectional view of a detachment mechanism showing a mount bracket according to a modification.

### DETAILED DESCRIPTION OF EMBODIMENTS

Hereinafter, an embodiment of the invention will be described in detail with reference to the drawings.

In the drawings, an arrow FR indicates a front side in a front-rear direction of a vehicle body, and an arrow RR indicates a rear side in the front-rear direction of the vehicle body.

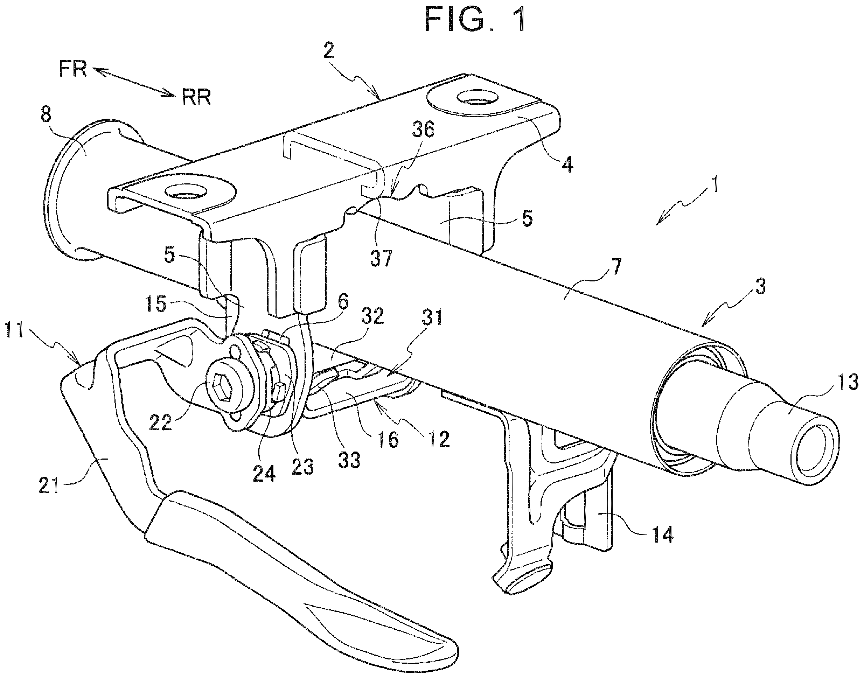

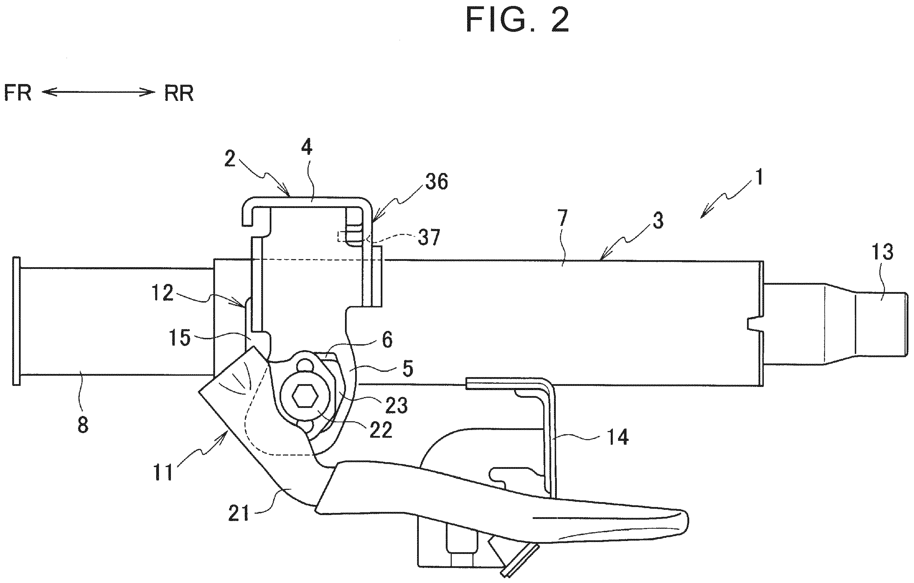

A steering column device 1 according to the present embodiment shown in FIG. 1 is a manual steering column device. As shown in FIGS. 1 and 2, the steering column device 1 includes a mount bracket 2 fixed to the vehicle body and a steering column (column tube) 3 supported by the mount bracket 2 so as to be pivotable in an up-down direction of the vehicle body (so that a tilt position is adjustable).

The mount bracket 2 includes a fixed portion 4 fixed to a ceiling surface (not shown) of the vehicle body. A pair of side wall portions 5 hangs from the fixed portion 4. Each side wall portion 5 has a long hole (tilt long hole) 6 that defines a tilt position adjustment range along the up-down direction of the vehicle body (tilt direction). The tilt long hole 6 is composed of an arcuate elongated hole centered on a shaft support portion (not shown).

The steering column 3 is mainly composed of an upper tube 7 disposed between the side wall portions 5, and a lower tube 8 fitted to the upper tube 7. The steering column 3 is provided with a lock mechanism 11 that integrally fastens the mount bracket 2, the upper tube 7, and the lower tube 8.

The upper tube 7 has a tubular shape, and is disposed between the side wall portions 5 along the front-rear direction of the vehicle body. A distance bracket 12 is attached to the outer circumference of the upper tube 7. With the distance bracket 12 sandwiched between the side wall portions 5, the upper tube 7 is held at a desired tilt position.

The lower tube 8 has a tubular shape, and the upper tube 7 is fitted to the lower tube 8 in the tube axial direction so that the upper tube 7 is provided outward of the lower tube 8 in a radial direction. The lower tube 8 is provided with a shaft support portion (not shown) at the front end portion, and the shaft support portion is supported by the vehicle body, whereby the rear end portion of the lower tube 8 pivots in the up-down direction of the vehicle body.

A steering shaft 13 is supported radially inward of the upper tube 7 and the lower tube 8, and a bracket 14 for mounting a column cover is provided radially outward of the upper tube 7.

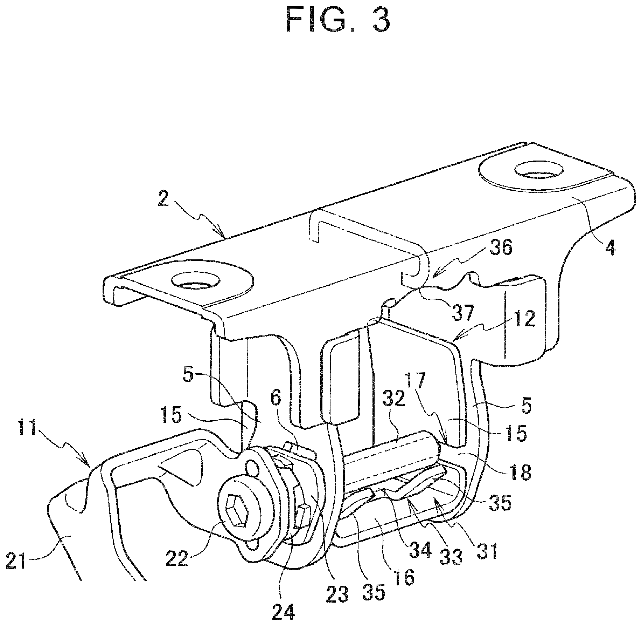

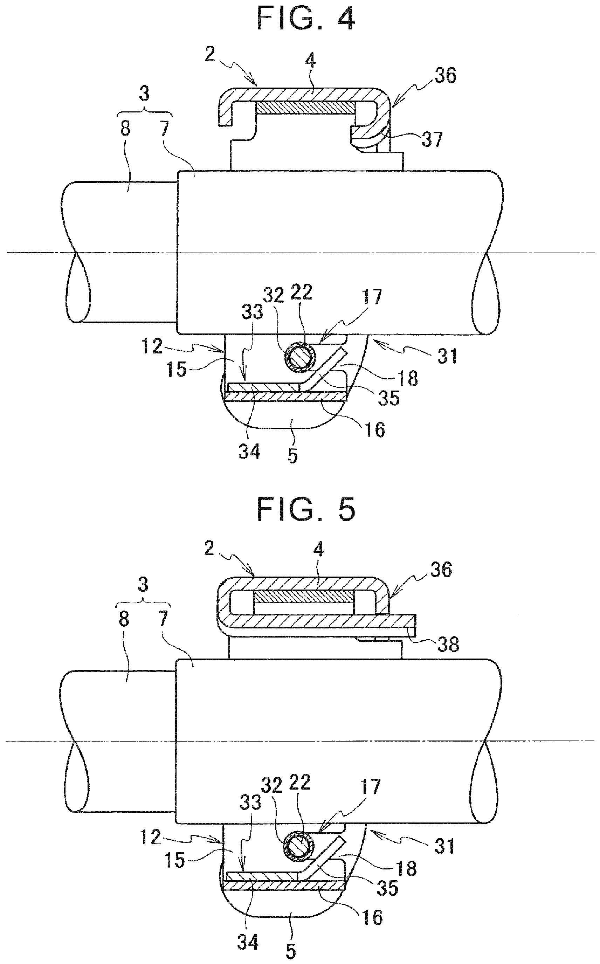

As shown in FIGS. 3 and 4, the distance bracket 12 includes a pair of sliding contact walls 15 extending in the up-down direction of the vehicle body and a connecting portion 16 that connects lower edges of the sliding contact walls 15 in a width direction of the vehicle body, thereby having a substantially U-shape. The upper edge of each sliding contact wall 15 is fixed to the outer circumference of the upper tube 7. Further, each sliding contact wall 15 is provided with a slit 17 extending along the front-rear direction of the vehicle body and having an open end 18 on the rear side in the front-rear direction of the vehicle body.

The lock mechanism 11 includes a lever 21, a tilt bolt 22, a fixing cam 23, a rotating cam 24, a washer (not shown), and a nut (not shown).

The tilt bolt 22 extends through the tilt long holes 6 of the side wall portions 5 and the slits 17 of the sliding contact walls 15 along the width direction of the vehicle body, and is supported so as to be rotatable about an axis. Further, the tilt bolt 22 is provided with the lever 21 at an end portion on one end side and the lever 21 is supported by the side wall portion 5 on the one end side. The end portion of the tilt bolt 22 on the other end side extends through the side wall portion 5 on the other end side and is screwed into a nut, and a washer is interposed between the nut and the side wall portion 5 on the other end side. Further, the fixing cam 23 and the rotating cam 24 are arranged at a portion on the tilt bolt 22 located between the lever 21 and the side wall portion 5 on the one end side.

The fixing cam 23 has an annular shape, the central portion of which the tilt bolt 22 extends through, and is disposed such that a fixing cam surface faces the lever 21. Further, the surface on the opposite side of the fixing cam 23 from the fixing cam surface is fitted in the tilt long hole 6, and the fixing cam 23 is provided so as not to rotate around the tilt bolt 22 and so as to be movable in the tilt long hole 6. Protrusions and recesses are alternately provided on the fixing cam surface in the circumferential direction.

The rotating cam 24 has an annular shape, the central portion of which the tilt bolt 22 extends through, and is disposed such that a rotating cam surface faces the fixing cam surface. The rotating cam 24 is assembled to the lever 21 so as to rotate integrally with the lever 21 about the axis of the tilt bolt 22 together with the tilt bolt 22 extending through the rotating cam 24. Protrusions and recesses are alternately provided on the rotating cam surface in the circumferential direction.

The steering column device 1 has a detachment mechanism 31 for detaching the steering column 3 from the mount bracket 2 when a load equal to or greater than a set value is applied to the steering column 3.

The detachment mechanism 31 has the slit 17 provided on each sliding contact wall 15 of the distance bracket 12 with the tilt bolt 22 inserted therethrough and having the open end 18 on the rear side in the front-rear direction of the vehicle body, and a collar 32 mounted on the outer circumference of the tilt bolt 22. The collar 32 is a resin collar made of a resin material. The collar 32 is loosely fitted to the outer circumference of the tilt bolt 22 so that it can idle around the tilt bolt 22. That is, the collar 32 is mounted on the outer circumference of the tilt bolt 22 with a play (space) between the outer circumference of the tilt bolt 22 and the inner circumference of the collar 32 (see FIG. 4).

Further, the detachment mechanism 31 has a bending plate 33 provided on the distance bracket 12 and for adjusting the load when the tilt bolt 22 is detached from the sliding contact walls 15 along the slits 17 of the distance bracket 12. The bending plate 33 has a fixed end portion 34 fixed to the connecting portion 16 of the distance bracket 12, and a bent portion (tongue portion) 35 extending from the fixed end portion 34 and bent upward in the up-down direction of the vehicle body.

Further, a receiving surface portion (guide) 36 is provided on the mount bracket 2 in order to facilitate the contraction of the steering column 3 due to the relative movement of the upper tube 7 and the lower tube 8, even when the steering column 3 comes into contact with the mount bracket 2. The receiving surface portion 36 has an arc shape that protrudes upward in the up-down direction of the vehicle body when viewed in the front-rear direction of the vehicle body (see FIGS. 1 and 3).

The receiving surface portion 36 is provided integrally with the rear portion of the mount bracket 2 in the front-rear direction of the vehicle body. The receiving surface portion 36 is configured to have a contact portion 37 that is formed by bending a plate-shaped portion constituting the receiving surface portion 36 toward the rear side of the vehicle body.

As shown in FIG. 4, since the shape of the contact portion 37 with which the steering column 3 can first come into contact in the receiving surface portion 36 has a curved surface in a side sectional view, the steering column 3 comes into point contact with the receiving surface portion 36 (contact portion 37). However, the invention is not limited to this, and as in the receiving surface portion 36 shown in FIG.5, by making the shape of a contact portion 38 flat in a side sectional view, the steering column 3 may come into surface contact with the receiving surface portion 36 (contact portion 38). The receiving surface portion 36 shown in FIG. 5 is provided integrally with the rear portion of the mount bracket 2 in the front-rear direction of the vehicle body.

Further, by setting the height position of the receiving surface portion 36 (contact portion 37) to a position lower than the upper edge of the tilt long hole 6, the receiving surface portion 36 may function as a stopper for regulating the position during the tilt-up operation.

Further, the receiving surface portion 36 may be provided with an elastic body (a tapping sound suppressing portion) for suppressing the generation of a tapping sound due to contact between the receiving surface portion 36 and the steering column 3 during the tilt-up operation. This elastic body is made of, for example, a nonwoven fabric.

Next, an operation procedure of the steering column device 1 of the present embodiment will be described.

In order to fix the steering column 3 at a desired position, the steering column 3 is first moved to a desired position in the tilt direction (in the up-down direction of the vehicle body) and the lever 21 is pivotally operated upward in the up-down direction of the vehicle body. By pivotally operating the lever 21 upward in the up-down direction of the vehicle body, the tilt bolt 22 rotates around the axis in the fastening direction.

When the tilt bolt 22 rotates in the fastening direction, the protrusions of the fixing cam 23 and the protrusions of the rotating cam 24 overlap with each other, increasing the axial dimension. As a result, the tilt bolt 22 is tightened, the sliding contact walls 15 of the distance bracket 12 are sandwiched between the side wall portions 5, and the steering column 3 is held at a desired position.

Further, in order to adjust the position of the steering column 3, the fastening of the steering column 3 to the mount bracket 2 is released. To do so, first, the lever 21 is pivotally operated downward in the up-down direction of the vehicle body. By pivotally operating the lever 21 downward in the up-down direction of the vehicle body, the tilt bolt 22 rotates around the axis in the fastening releasing direction.

When the tilt bolt 22 rotates in the fastening releasing direction, the protrusions of the fixing cam 23 and the recesses of the rotating cam 24 overlap with each other, reducing the axial dimension. As a result, the tilt bolt 22 is loosened, the space between the side wall portions 5 is increased, and the pressure contact between the side wall portions 5 and the sliding contact walls 15 of the distance bracket 12 is eliminated, enabling the steering column 3 to move with respect to the mount bracket 2 in the tilt direction.

Next, the operation of the steering column device 1 at the time of a secondary collision will be described.

When the upper tube 7 moves toward the front of the vehicle body along the tube axial direction due to a load applied to a steering wheel by a driver at the time of a secondary collision, the distance bracket 12 moves toward the front of the vehicle body along the slit 17 to be detached from the tilt bolt 22. The detachment load when the distance bracket 12 is detached from the tilt bolt 22 is adjusted by the bending plate 33 provided on the distance bracket 12. With the detachment of the distance bracket 12 from the tilt bolt 22 in the detachment mechanism 31, the energy at the time of a secondary collision is absorbed.

Further, when the upper tube 7 moves toward the front of the vehicle body along the tube axial direction, the relative movement of the upper tube 7 and the lower tube 8 causes the steering column 3 to be contracted. The sliding resistance of the upper tube 7 with respect to the lower tube 8 when the steering column 3 is contracted also absorbs the energy at the time of a secondary collision.

In this way, a relatively large energy is effectively absorbed by the detachment of the steering column 3 from the mount bracket 2 in the detachment mechanism 31 and the sliding resistance of the upper tube 7 with respect to the lower tube 8.

The operation and effect of the present embodiment will be described below.

The steering column device 1 has the mount bracket 2 fixed to the vehicle body and having the side wall portions 5, and the steering column 3 constituted by fitting the upper tube 7 and the lower tube 8 to each other and disposed between the side wall portions 5 so as to extend in the front-rear direction of the vehicle body. The steering column device 1 includes the distance bracket 12 provided on the upper tube 7 and having the sliding contact walls 15, and the tilt bolt 22 extending through the side wall portions 5 and the sliding contact walls 15. The steering column device 1 includes the receiving surface portion 36 on the mount bracket 2. The receiving surface portion 36 suppresses the steering column 3 that has come into contact with the mount bracket 2 from bending upward in the up-down direction of the vehicle body when a load equal to or greater than a set value is applied to the upper tube 7 toward the front of the vehicle body. The receiving surface portion 36 facilitates the contraction of the steering column 3 due to the relative movement of the upper tube 7 and the lower tube 8. The receiving surface portion 36 has an arc shape that protrudes upward in the up-down direction of the vehicle body when viewed in the front-rear direction of the vehicle body.

The receiving surface portion 36 is provided on the mount bracket 2 in order to facilitate the contraction of the steering column 3 due to the relative movement of the upper tube 7 and the lower tube 8, when a load equal to or greater than a set value is applied to the upper tube 7 toward the front of the vehicle body. This suppresses the steering column 3 that has come into contact with the mount bracket 2 from bending upward in the up-down direction of the vehicle body, allowing reliable contraction of the steering column 3, when a load is applied to the steering column 3 at the time of a secondary collision.

The receiving surface portion 36 is provided integrally with the mount bracket 2.

With such a configuration of the receiving surface portion 36, it is possible to suppress an increase in the number of components and deterioration of the assembling properties of the steering column device 1.

The receiving surface portion 36 has the contact portion 37 defined as a portion of the receiving surface portion 36 with which the steering column 3 first comes into contact, and the contact portion 37 has a curved surface or a flat surface in a side sectional view.

The shape of the contact portion 37 on the receiving surface portion 36 can be appropriately changed depending on the position where the receiving surface portion 36 (contact portion 37) is provided, the purpose of providing the receiving surface portion 36 (contact portion 37), and the like. By appropriately changing the shape of the contact portion 37 on the receiving surface portion 36, it is possible to suppress the mount bracket 2 from biting into the steering column 3 when a load is applied to the steering column 3 at the time of a secondary collision.

The steering column device of the invention has been exemplified using the above embodiment, but the invention is not limited to this embodiment, and various other embodiments can be adopted without departing from the scope of the invention.

## Claims

1. A steering column device (1) **characterized by** comprising:
a mount bracket (2) fixed to a vehicle body and including a pair of side wall portions (5);
a steering column (3) constituted by fitting an upper tube (7) and a lower tube (8) to each other, the steering column (3) being disposed between the side wall portions (5) so as to extend in a front-rear direction of the vehicle body;
a distance bracket (12) provided on the upper tube (7) and including a pair of sliding contact walls (15);
a tilt bolt (22) extending through the side wall portions (5) and the sliding contact walls (15); and
a receiving surface portion (36) provided on the mount bracket (2), the receiving surface portion (36) being configured to suppress the steering column (3) that has come into contact with the mount bracket (2) from bending upward in an up-down direction of the vehicle body when a load equal to or greater than a set value is applied to the upper tube (7) toward a front of the vehicle body, and the receiving surface portion (36) being configured to facilitate contraction of the steering column (3) due to a relative movement of the upper tube (7) and the lower tube (8), **characterized in that** the receiving surface portion (36) has an arc shape that protrudes upward in the up-down direction of the vehicle body when viewed in the front-rear direction of the vehicle body.

2. The steering column device (1) according to claim 1, **characterized in that** the receiving surface portion (36) is provided integrally with the mount bracket (2).

3. The steering column device (1) according to claim 1 or 2, **characterized in that**:
the receiving surface portion (36) includes a contact portion (37;38) defined as a portion of the receiving surface portion (36) with which the steering column (3) first comes into contact; and
the contact portion (37;38) has one of a curved surface and a flat surface in a side sectional view.
